Europäisches Patentamt

European Patent Office

Office européen des brevets

(11) Veröffentlichungsnummer: **0 118 697**
**B1**

(12) # EUROPÄISCHE PATENTSCHRIFT

(45) Veröffentlichungstag der Patentschrift:
06.08.86

(51) Int. Cl.⁴: **B 65 G 53/48**

(21) Anmeldenummer: **84100791.7**

(22) Anmeldetag: **26.01.84**

(54) Vorrichtung zum Einschleusen von staubförmigem Fördergut, insbesondere Zement und Zementrohmehl.

(30) Priorität: **05.02.83 DE 3303927**

(43) Veröffentlichungstag der Anmeldung:
**19.09.84 Patentblatt 84/38**

(45) Bekanntmachung des Hinweises auf die Patenterteilung:
**06.08.86 Patentblatt 86/32**

(84) Benannte Vertragsstaaten:
**AT BE CH DE FR GB IT LI LU NL SE**

(56) Entgegenhaltungen:
**EP - A - 0 098 340**
**CH - A - 545 739**
**DE - A - 2 022 635**
**DE - B - 2 645 047**
**US - A - 4 363 571**

(73) Patentinhaber: **IBAU HAMBURG Ingenieurgesellschaft Industriebau mbH, Amsinckstrasse 45, D-2000 Hamburg 1 (DE)**

(72) Erfinder: **Delfs, Hans-Jürgen, Kahden 35, D-2000 Hamburg 65 (DE)**

(74) Vertreter: **von Raffay, Vincenz, Dipl.-Ing. et al, Patentanwälte Raffay, Fleck & Partner Postfach 32 32 17, D-2000 Hamburg 13 (DE)**

**Beschreibung**

Die Erfindung betrifft eine Vorrichtung nach dem Oberbegriff des Anspruches 1.

Eine derartige Vorrichtung ist aus der DE-A-2 022 635 bekannt. Diese Vorrichtung weist nur eine Schneckenpumpe auf, so dass die Förderleistung entsprechend begrenzt ist. Die Auslaufkammer dieser bekannten Vorrichtung bildet in ihrem unteren Teil praktisch ein Teil der Förderrohrleitung, so dass hier eher eine Querschnittserweiterung eintritt.

Aus der DE-B1-2 645 047 ist es grundsätzlich bekannt, in eine Förderrohrleitung mehrere Aufgabetrichter zu führen. Die Aufgabeeinrichtungen sind aber anders ausgebildet, insbesondere ist keine Schneckenpumpe mit Rückschlagklappe vorgesehen, die in eine Auslaufkammer und von dieser in die Förderrohrleitung fördert.

Es ist nun wünschenswert, beispielsweise bei der Beladung von Schiffen die Leistung zumindest zeitweilig beträchtlich zu erhöhen. Dieses geschieht in bekannter Weise dadurch, dass eine entsprechende Anzahl von Förderleitungen parallelgeschaltet werden. Jede Förderrohrleitung ist mit einer Pumpe und mit einer Druckgasversorgung ausgerüstet.

Der Erfindung liegt nun die Aufgabe zugrunde, eine Vorrichtung der eingangs genannten Art zu schaffen, durch die eine Leistungserhöhung bei nur einer Förderrohrleitung möglich ist.

Diese Aufgabe wird durch das Kennzeichen des Patentanspruches 1 gelöst.

Die Erfindung schlägt eine einfache Lösung vor, wie mehrere Schneckenpumpen an eine Förderrohrleitung angeschlossen werden können. Dieses wird durch die Beschleunigungsstrecke ermöglicht, die sicherstellt, dass das von den verschiedenen Pumpen zugeführte Material, das durch Schwerkrafteinwirkung herunterfällt, auch sicher mitgerissen wird. Die Pumpen können gleichgross oder von unterschiedlicher Grösse sein, wobei sie mit ihren Auslaufkammern immer in die Beschleunigungsstrecke führen.

Es ist also möglich, mehrere Schneckenpumpen an eine Förderleitung anzuschliessen. Diese Pumpen können gleichgross oder von unterschiedlicher Grösse sein. Je nach gewünschter Förderleistung werden eine oder mehrere Pumpen eingeschaltet, wobei die entsprechenden Auslaufkammern immer in die Beschleunigungsstrecke führen.

In vorteilhafter Weise kann die Vorrichtung so ausgebildet sein wie in Anspruch 2 angegeben. Hierdurch ist es möglich, immer nur die Schneckenpumpe zuzuschalten, die eingesetzt werden soll. Darüber hinaus werden die Schieber, dadurch dass sie der Auslaufkammer nachgeschaltet sind, nur durch das Fördergut beansprucht, das unter Schwerkraftwirkung durch diesen Bereich hindurchfällt. Diese Beanspruchung führt zu einem Verschleiss, der so gering ist, dass er in der Praxis vernachlässigbar ist. Ventile oder Schieber können also da angeordnet werden, wo die Förderung noch nicht durch Druckgas in dem Hauptstrom stattfindet.

Weitere vorteilhafte Ausgestaltungen sind Gegenstand der Ansprüche 2 und 3. Hierdurch ist es möglich, weitere Schneckenpumpen je nach Bedarf der einen oder anderen oder auch beiden Förderleitungen zuzuschalten. Die weitere Druckgasversorgung (Anspruch 4) ermöglicht es, diese immer mit der Förderrohrleitung zu verbinden, für die ein erhöhter Druckgasbedarf besteht. Schliesslich ist es möglich, die Pumpen nahe beieinander aufzustellen, wodurch die Versorgung und Bedienung, abgesehen von geringem Raumbedarf, erleichtert wird.

Im folgenden wird die Erfindung unter Hinweis auf die Zeichnung anhand verschiedener Ausführungsbeispiele näher erläutert.

Es zeigt:

Fig. 1 eine teilweise geschnittene schematische Ansicht einer Vorrichtung nach der Erfindung mit einer Schneckenpumpe;

Fig. 2 eine der Fig. 1 entsprechende schematische Ansicht, jedoch mit zwei Schneckenpumpen, die zueinander parallel geschaltet in eine Förderrohrleitung führen; und

Fig. 3 eine andere Ausführungsform mit drei Schneckenpumpen und zwei Förderrohrleitungen.

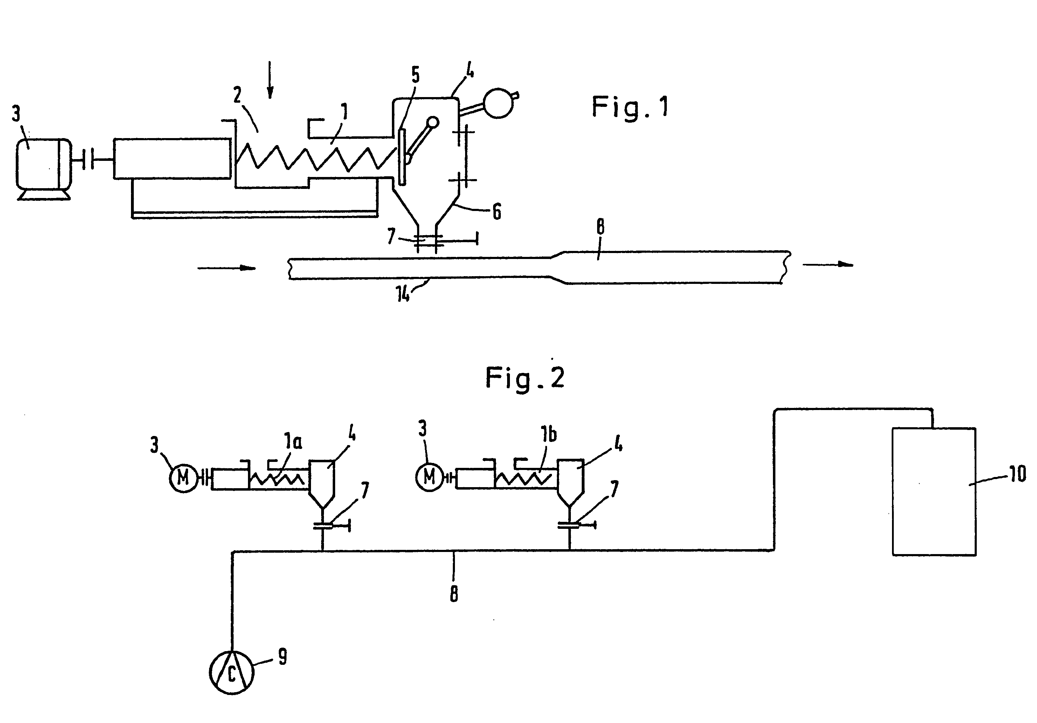

Die in Fig. 1 dargestellte Vorrichtung besteht aus einer Schneckenpumpe 1 mit einer Eingabeöffnung 2, der das Gut, beispielsweise aus einer Zementmühle zugeführt wird. Der Antrieb erfolgt über einen Motor 3. Die Auslaufkammer 4 ist durch eine Rückschlagklappe 5 gegen das Schneckengehäuse abgedichtet. Grundsätzlich ist die Auslaufkammer gasdicht ausgebildet. Ein Trichter 6 führt über ein Ventil, d.h. über einen Schieber 7 in die Förderrohrleitung 8, wobei die Förderrichtung durch einen Pfeil angedeutet ist. In diesem Bereich ist die Förderrohrleitung als Beschleunigungsstrecke 14 ausgebildet, und zwar durch einen geringeren Rohrquerschnitt. Stromaufwärts von der Einmündung der Auslaufkammer in die Förderrohrleitung befindet sich eine nicht gezeigte Druckgasversorgung.

Bei der Ausführungsform nach Fig. 2 sind zwei Schneckenpumpen 1a und 1b parallel geschaltet mit der Beschleunigungsstrecke der Förderrohrleitung 8 verbunden. Der die Druckgasversorgung darstellende Verdichter wird mit 9 bezeichnet. Die Förderung erfolgt zu einem entfernt liegenden Silo 10. Die beiden Schneckenpumpen 1a und 1b können von gleicher oder unterschiedlicher Grösse sein. Es ist selbstverständlich möglich, mehr als zwei Schneckenpumpen vorzusehen und diese je nach Bedarf zuzuschalten. Es ist erkennbar, dass die Schieber 7 nicht in dem unter Druckluft stehenden Hauptförderstrom liegen, sondern lediglich durch das Fördergut belastet werden, das unter Schwerkraftwirkung aus der zugeordneten Auslaufkammer in die Förderrohrleitung 8 fällt. In der dicht ausgebildeten Auslaufkammer bildet sich im Betrieb verständlicherweise der Druck aus, der auch in der Förderrohrleitung herrscht.

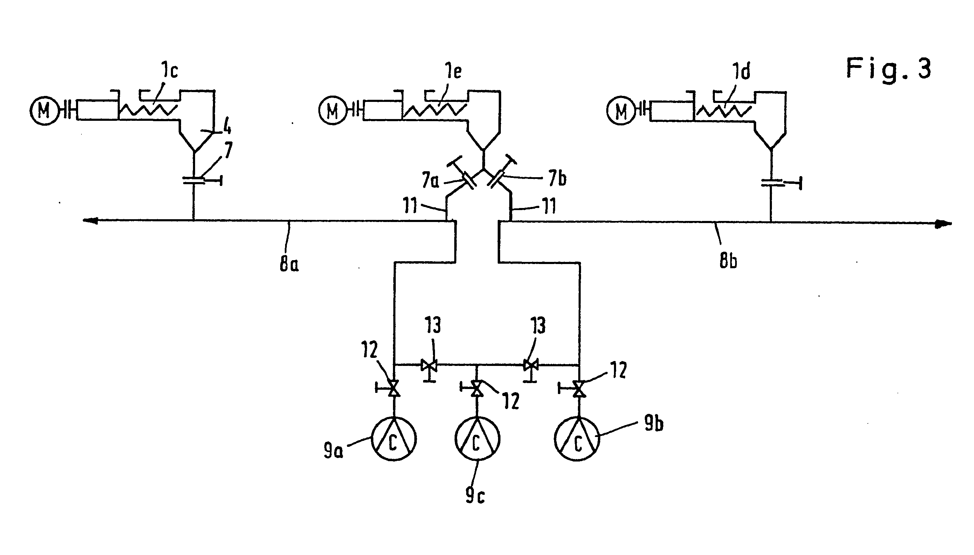

Bei der Ausführungsform nach Fig. 3 sind zwei parallel zueinander verlaufende Förderrohrleitungen 8a und 8b vorgesehen. In die Förderrohrleitung 8a führt eine Schneckenpumpe 1c, und in die Förderrohrleitung 8b führt eine Schneckenpumpe 1d. Nach der Schaltung nach Fig. 2 können in jede Förderrohrleitung 8a oder 8b weitere Schneckenpumpen führen.

Die dritte Schneckenpumpe 1e der Ausführungsform nach Fig. 3 ist über Leitungen 11 mit jeder der Förderrohrleitung 8a und 8b verbunden. In jeder der Leitungen 11 befindet sich ein Schieber 7a bzw. 7b. Durch diese Schaltung ist es möglich, die dritte Schneckenpumpe 1e wahlweise mit der Leitung 8a oder der Leitung 8b zu verbinden. Grundsätzlich ist es natürlich auch möglich, die Schneckenpumpe 1e mit beiden Förderrohrleitungen zu verbinden. Hierdurch kann die Vorrichtung an die unterschiedlichsten Anforderungen hinsichtlich Förderleistung in der Praxis angepasst werden.

Auch die Druckgasversorgung kann je nach Bedarf sehr unterschiedlich erfolgen. Mit der Förderrohrleitung 8a ist eine Druckgasversorgung 9a verbunden. Entsprechend ist eine Druckgasversorgung 9b mit der Förderrohrleitung 8b verbunden. Eine dritte Druckgasversorgung 9c ist wahlweise mit einer oder mit beiden der Förderrohrleitungen 8a, 8b verbindbar. Entsprechende Ventile 12 und 13 ermöglichen den gewünschten Einsatz der Druckgasversorger 9a, 9b und 9c.

Wenn beispielsweise Zementrohmehl gefördert werden soll, so liegt die maximale Leistung einer bekannten Vorrichtung bei 300 t/h. Wenn nun beispielsweise 1000 t/h gefördert werden sollen, so ist es nach dem Stand der Technik erforderlich, vier Druckluftleitungen mit vier Pumpen parallel zu schalten. Nach der Erfindung genügt eine entsprechend dimensionierte Druckgasleitung, in die die vier Pumpen führen, und zwar so, wie in Fig. 2 dargestellt. Wenn die Anlage dann nicht mit voller Leistung arbeiten soll, können die nicht benötigten Pumpen abgeschaltet werden.

Auch ist die Erfindung einsetzbar, wenn in einer Zementmahlanlage mehrere Mühlen mit unterschiedlicher Leistung vorgesehen sind, die aber eine gleiche Sorte Zement verarbeiten. Es ist dann möglich, diesen Zement über eine Leitung zu einem oder zu mehreren Silos zu fördern. Wenn Zement gefördert wird, ist das Druckgas Luft.

## Patentansprüche

1. Vorrichtung zum Einschleusen von staubförmigem Gut, insbesondere Zement oder Zementrohmehl, mittels einer Schneckenpumpe (1) mit Rückschlagklappe (5) in eine Förderrohrleitung (8) mit Druckgas als Fördermedium und mit einer Auslaufkammer (4) oberhalb der Förderrohrleitung und zwischen Schneckenpumpe (1) und Förderrohrleitung, wobei in Förderrichtung des Fördergutes unter der Auslaufkammer (4) die Druckbeaufschlagung (Verdichter 9), unmittelbar in die Förderrohrleitung erfolgt, dadurch gekennzeichnet, dass die Förderrohrleitung, im ganzen Bereich, in den die Auslaufkammer mündet, als Beschleunigungsstrecke (14) durch einen geringeren Rohrquerschnitt ausgebildet ist, und dass mindestens zwei Schneckenpumpen (1a, 1b) über ihre Auslaufkammer (4) parallel zueinander in diese Beschleunigungsstrecke (14) der Förderrohrleitung (8) führen.

2. Vorrichtung nach Anspruch 1, dadurch gekennzeichnet, dass zwischen jeder Auslaufkammer (4) und der Förderrohrleitung (8) ein Schieber (7) vorgesehen ist.

3. Vorrichtung nach Anspruch 1, dadurch gekennzeichnet, dass zwei unabhängig voneinander unmittelbar mit Druckgas versorgte Förderrohrleitungen (8a, 8b) vorgesehen sind, in deren Beschleunigungsstrecken mindestens je eine Schneckenpumpe (1c, 1d) über ihre zugehörigen Auslaufkammern (4) führen, und dass eine weitere Schneckenpumpe (1e) vorgesehen ist, die über ihre Auslaufkammer (4) in die Beschleunigungsstrecken beider Förderrohrleitungen (8a, 8b) führen, wobei zwischen der Auslaufkammer und jeder Förderrohrleitung (8a, 8b) ein getrennt betätigbarer Schieber (7a, 7b) vorgesehen ist.

4. Vorrichtung nach Anspruch 3, dadurch gekennzeichnet, dass zusätzlich zu den Druckgasversorgern (9a, 9b) für jede Förderrohrleitung (8a, 8b) eine weitere Druckgasversorgung (9c) vorgesehen ist, die wahlweise mit jeder der Förderrohrleitungen verbindbar ist.

## Claims

1. Apparatus for feeding in pulverulent material, particularly cement or cement straw dust, by means of a screw pump (1) with a check valve (5) into a conveying pipeline (8) with pressurized gas as the conveying medium and with a discharge chamber (4) above the conveying pipeline and between the screw pump (1) and conveying pipeline, pressurization (compressor 9) taking place directly in the conveying pipeline in the conveying direction of the material below the discharge chamber (4), characterized in that the conveying pipeline in the entire area into which the discharge chamber issues is constructed as an acceleration zone (14) through a smaller pipe cross-section and that at least two screw pumps (1a, 1b) lead via their discharge chambers (4) and parallel to one another into said acceleration zone (14) of the conveying pipeline (8).

2. Apparatus according to claim 1, characterized in that a slide valve (7) is provided between each discharge chamber (4) and the conveying pipeline (8).

3. Apparatus according to claim 1, characterized in that there are two conveying pipelines (8a, 8b), supplied directly and independently of one another with pressurized gas and into whose acceleration zones lead in each case one screw pump (1c, 1d) via the associated discharge chambers (4) and that a further screw pump (1e) is provided which, via its discharge chamber (4), leads into the acceleration zones of both conveying pipelines (8a, 8b), a separately operable slide valve (7a, 7b) being provided between the discharge chamber and each conveying pipeline (8a, 8b).

4. Apparatus according to claim 3, characterized in that in addition to the pressurized gas supplying means (9a, 9b) for each conveying pipeline (8a, 8b), a further pressurized gas supply means (9c) is provided, which can be connected as required with each of the conveying pipelines.

## Revendications

1. Dispositif d'éclusage de matières pulvérulentes, en particulier de ciment ou de farine crue, au moyen d'une pompe à vis (1) avec soupape de non-retour (5) dans une tuyauterie de refoulement (8) avec du gaz comprimé comme liquide refoulé et avec une chambre d'évacuation (4) au-dessus de la tuyauterie de refoulement et entre la pompe à vis (1) et la tuyauterie de refoulement, l'alimentation en pression (compresseur 9) étant effectuée dans le sens du refoulement des matières à refouler au-dessous de la chambre d'évacuation (4) directement dans la tuyauterie de refoulement, caractérisé en ce que la tuyauterie de refoulement est formée dans toute la zone, dans laquelle la chambre d'évacuation débouche, comme parcours avec accélération (14) avec une section tubulaire plus faible et qu'au moins deux pompes à vis (1a, 1b) conduisent par leurs chambres d'évacuation (4) parallèles l'une à l'autre à ce parcours avec accélération (14) de la tuyauterie de refoulement (8).

2. Dispositif selon la revendication 1, caractérisé en ce qu'une vanne d'arrêt (7) est prévue entre chaque chambre d'évacuation (4) et la tuyauterie de refoulement (8).

3. Dispositif selon la revendication 1, caractérisé en ce que deux tuyauteries de refoulement (8a, 8b) alimentées directement en gaz comprimé indépendamment l'une de l'autre sont prévues, dans les parcours avec accélération desquelles conduit au moins une pompe à vis (1c, 1d) respective par sa chambre d'évacuation (4) correspondante et qu'une pompe à vis supplémentaire (1e), qui conduit par sa chambre d'évacuation (4) dans les parcours d'accélération des deux tuyauteries de refoulement (8a, 8b), est prévue, une vanne d'arrêt à actionnement séparé (7a, 7b) étant prévue entre la chambre d'évacuation et chaque tuyauterie de refoulement (8a, 8b).

4. Dispositif selon la revendication 3, caractérisé en ce qu'un dispositif supplémentaire d'alimentation en gaz comprimé (9c), qui peut être, au choix, relié à chacune des tuyauteries de refoulement, est prévu en plus des dispositifs d'alimentation en gaz comprimé (9a, 9b) pour chacune des tuyauteries de refoulement (8a, 8b).

Fig.1

Fig.2

0 118 697

Fig.3

0 118 697